# EUROPEAN PATENT SPECIFICATION

(11) **EP 2 763 359 B1**
(45) Date of publication and mention of the grant of the patent: **09.08.2017**
(21) Application number: 12834689.7
(22) Date of filing: 05.06.2012
(51) Int. Cl.: H04L 12/70, H04L 12/26, H04L 29/14, H04L 12/24, H04L 12/721, H04L 12/707, H04L 12/703

(54) **COMMUNICATION SYSTEM, SENDING DEVICE, COMMUNICATION DEVICE, FAILURE NOTIFICATION METHOD AND NON-TEMPORARY COMPUTER-READABLE MEDIUM STORING PROGRAM**
KOMMUNIKATIONSSYSTEM, SENDEVORRICHTUNG, KOMMUNIKATIONSVORRICHTUNG, FEHLERMELDUNGSVERFAHREN UND NICHT-TEMPORÄRES COMPUTERLESBARES MEDIENTRÄGERSPEICHERPROGRAMM
SYSTÈME DE COMMUNICATION, DISPOSITIF D'ENVOI, DISPOSITIF DE COMMUNICATION, PROCÉDÉ DE NOTIFICATION DE DÉFAILLANCE ET SUPPORT LISIBLE PAR ORDINATEUR NON TEMPORAIRE STOCKANT UN PROGRAMME

(30) Priority: 27.09.2011 JP 2011210567
(43) Date of publication of application: 06.08.2014
(73) Proprietor: NEC Corporation, Tokyo 108-8001 (JP)
(72) Inventor: TANAKA, Hiroshi, Tokyo 108-8001 (JP); UMAYABASHI, Masaki, Tokyo 108-8001 (JP); SAKURAI, Akira, Tokyo 108-8001 (JP)
(74) Representative: Robson, Aidan John
(86) International application number: PCT/JP2012/003665
(87) International publication number: WO 2013/046496

(56) References cited:
- WO-A1-2007/086157
- JP-A- 2011 010 047
- SWALLOW G ET AL: "MPLS Fault Management OAM; draft-ietf-mpls-tp-fault-07.txt", MPLS FAULT MANAGEMENT OAM; DRAFT-IETF-MPLS-TP-FAULT-07.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 7, 2 September 2011 (2011-09-02), pages 1-17, XP015077885, [retrieved on 2011-09-02]
- TOM HUBER TELLABS OY FINLAND: "Draft Recommendation ITU-T G.8113.2/Y.1372.2 (for consent);WD05r5", ITU-T DRAFT ; STUDY PERIOD 2009-2012, INTERNATIONAL TELECOMMUNICATION UNION, GENEVA ; CH, vol. 10/15, 8 September 2011 (2011-09-08), pages 1-21, XP044038822, [retrieved on 2011-09-08]
- BUSI I ET AL: "Operations, Administration, and Maintenance Framework for MPLS-Based Transport Networks; rfc6371.txt", OPERATIONS, ADMINISTRATION, AND MAINTENANCE FRAMEWORK FOR MPLS-BASED TRANSPORT NETWORKS; RFC6371.TXT, INTERNET ENGINEERING TASK FORCE, IETF; STANDARD, INTERNET SOCIETY (ISOC) 4, RUE DES FALAISES CH- 1205 GENEVA, SWITZERLAND, 21 September 2011 (2011-09-21), pages 1-62, XP015081297, [retrieved on 2011-09-21]

## Description

### TECHNICAL FIELD

The present invention relates to a communication system, a transmission apparatus, a communication apparatus, a failure notification method, and a non-transitory computer-readable medium storing a program. In particular, the invention relates to a communication system, a transmission apparatus, a communication apparatus, a failure notification method, and a non-transitory computer-readable medium storing a program which each transmit or receive a failure occurrence frame.

### BACKGROUND ART

Multi Protocol Label Switching-Transport Profile (MPLS-TP) is a packet transport technology which is being standardized by the Internet Engineering Task Force (IETF). Transport networks have been achieved by the Synchronous Optical Network/Synchronous Digital Hierarchy (SONET/SDH) technology. In contrast to this technology, MPLS-TP defines functions extracted from the existing MPLS technology and new additional functions to achieve a packet transport network which is the most suitable to implement packet services.

The network architecture of MPLS-TP consists of the data plane (D-plane), the management plane (M-plane), and the control plane (C-plane). In the M-plane, monitoring, control, or the like are performed on the apparatuses and label switched paths (LSPs) forming the MPLS-TP network. In the C-plane, setup, maintenance, or the like are performed on LSPs which are not controlled by the M-plane by performing signaling between the apparatuses. In the D-plane, data is transferred in accordance with label-switching or encapsulation of the existing MPLS, and operation, administration, and maintenance (OAM) functions are performed.

MPLS-TP separates the three planes logically or physically. Specifically, the D-plane operates independently of the C- and M-planes in the architecture of MPLS-TP. Thus, the dependence on the IP layer and the complexity thereof are eliminated, ensuring robustness required of the transport network. While the existing MPLS depends on the IP layer in the OAM functions, MPLS-TP has new additional OAM functions which do not depend on the IP layer.

The layer structure of MPLS-TP consists of three layers. An MPLS-TP transport layer formed using the IETF-standardized MPLS/PWE3 (Pseudo Wire Emulation) technology is called the "transport network layer." The layer higher than the transport network layer is called the "client layer." The client layer can implement various layer technologies using the PWE3 technology. The layer lower than the transport network layer is called the "server layer." The server layer allows use of various layer technologies in transmission between nodes in an MPLS-TP network.

In an MPLS-TP network formed by apparatuses conforming to MPLS-TP, an end-to-end, two-layer path (PW path, LSP path) is constructed between edge nodes [label edge routers (LERs)] using the PWE3 and MPLS technologies. A frame received from the client layer is encapsulated by a two-stage MPLS label (PW label, LSP label) and then transferred on the path. At this time, MPLS labels are stacked in a particular section of the path to layer the path, and the layered information is analyzed using the OAM functions. Thus, monitoring, maintenance, or the like of the section is performed.

One of the OAM functions is the alarm indication signal (AIS) function. The AIS function is a function of, when a failure is detected in a lower layer, periodically transmitting an AIS frame to a maintenance end point (MEP) of an upper layer which may be affected and inhibiting other alarms [loss of channel (LOC), or the like] related to the failure. When the MEP, which has received AIS frames, no longer receives an AIS frame, it is determined that recovery from the detected failure has been made, and the inhibition of alarms is cancelled.

The MPLS-TP OAM functions, including the AIS function, are defined in RFC5860 "Requirements for Operations, Administration, and Maintenance (OAM) in MPLS Transport Networks," retrieved on Jul. 29, 2011 from the Internet <URL: http://tools.ietf.org/html/rfc5860> and MPLS Working Group Internet Draft "draft-ietf-mpls-tp-oam-framework-11.txt (Operations, Administration and Maintenance Framework for MPLS-based Transport Networks)," retrieved on Jul. 29, 2011 from the Internet <URL: http://tools.ietf.org/html/draft-ietf mpls-tp-oam-framework-11 >.

Note that in the transport network layer, the transport service layer, the transport path layer, and the section layer are defined. The transport service layer is formed mainly by a pseudowire (PW). The transport path layer is formed mainly by an LSP. The section layer is formed mainly by a link.

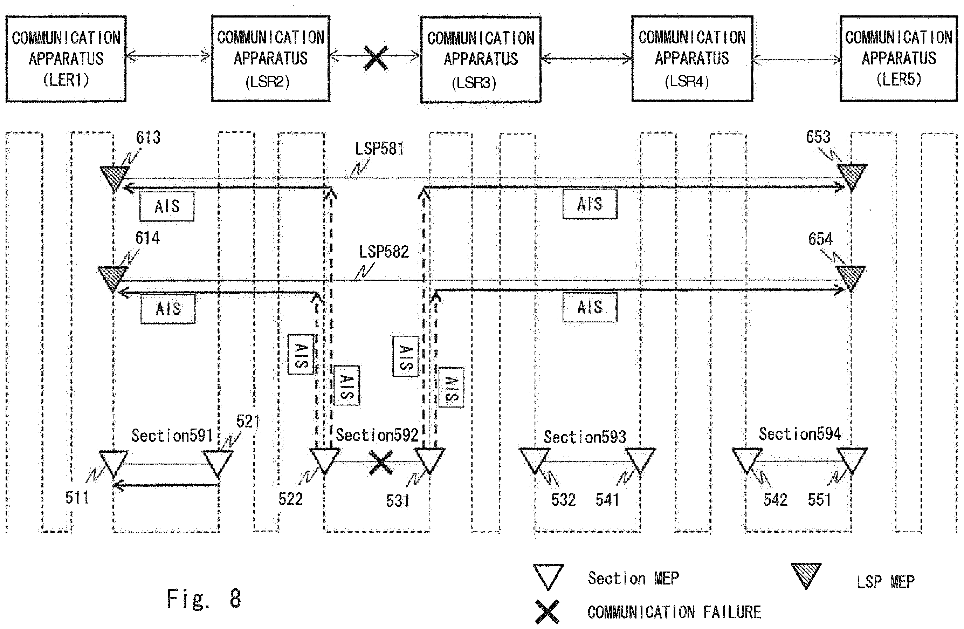

Referring to Fig. 8, an operation example of a typical AIS notification function will be described. A system shown in Fig. 8 includes LERs 1 and 5 serving as edge nodes and label switched routers (LSRs) 2 to 4. LSP MEPs 613 and 614 are set at the LER 1, whereas LSP MEPs 653 and 654 are set at the LER 5. An LSP 581 is constructed between the LSP MEPs 613 and 653, whereas an LSP 582 is constructed between the LSP MEPs 614 and 654. Sections 591, 592, 593, and 594 are constructed between adjacent apparatuses. The sections have SECTION MEPs (511, 521, 522, 531, 532, 541, 542, and 551) as the endpoints thereof.

Assuming that a bidirectional linking-down failure has occurred in a section 592 connecting the LSRs 2 and 3, the SECTION MEPs 522 and 531 detect the failure. The SECTION MEPs 522 and 531 then generate AIS frames corresponding to the LSPs 581 and 582, which are multiplexed with the section 592. The SECTION MEP 522 then periodically transmits AIS frames to the LSP MEPs 613 and 614, which are located in a direction opposite to the direction to the section 592, where the failure has occurred. Similarly, the SECTION MEP 531 periodically transmits AIS frames to the LSP MEPs 653 and 654, which are located in a direction opposite to the direction to the section 592, where the failure has occurred.

As described above, the SECTION MEPs adjacent to the failed section generate AIS frames corresponding to all the LSPs (for example, if there are two LSPs as described above, the SECTION MEPs generate two AIS frames) and transmit the AIS frames.

Next, literature disclosing a technology related to MPLS-TP and literature disclosing a technology using MPLS-TP will be described below.

Japanese Unexamined Patent Application Publication No. 2011-10047 discloses a failure monitoring system where an MIP (maintenance midpoint) detects an AIS frame and notifies a higher-level network monitoring system of the frame detection. However, this Literature does not mention transfer of the AIS frame between the sections.

Published Japanese Translation of PCT International Publication for Patent Application, No. 2007-536878 discloses a system which propagates failure information in an Ethemet® OAM network having a multi-level OAM domain. In this system, when propagating an EthAIS frame during OAM forwarding, an MEP node receives AIS frames and combines all the received frames to generate a new AIS frame. The MEP node then transmits the generated new AIS frame.

Swallow G et al: "MPLS Fault Management OAM; draft-ietf-mpls-tp-fault-07.txt", 2 September 2011, pages 1-17, XP015077885 refers to a similar MPLS fault management system.

However, in the AIS notification process shown in Fig. 8, the communication apparatus which has detected the failure generates the AIS frames corresponding to all the LSPs and transmits the generated AIS frames. This causes a problem that as the number of paths increases, the communication apparatus bears a larger processing load to generate and transmit AIS frames.

For example, if there is an apparatus having low processing performance in the MPLS-TP network, the number of paths is limited according to the processing performance of this apparatus. Accordingly, the number of paths which can be constructed in the entire network is limited. That is, the resources in the network cannot be utilized effectively. On the other hand, if a desired maximum number of paths are constructed, the processing apparatuses constituting the MPLS-TP network would need to have excessive circuit resources or CPU performance.

Further, the communication apparatus which has detected the failure may lag behind a predetermined transmission cycle. The MPLS-TP standard stipulates that a failure notification frame be transmitted in constant cycles and that each cycle be one second at the shortest. Accordingly, if the number of paths increases, a process of generating AIS frames corresponding to the increased paths may not be complete within the cycle time. That is, increases in the number of paths make it difficult to conform to the standard.

While JP 2011-10047 discloses a technology for performing an AIS frame determination process, a frame transfer process, and the like in a communication apparatus, it does not disclose any technology which addresses increases in the processing load associated with increases in the number of paths.

Published Japanese Translation of PCT International Publication for Patent Application, No. 2007-536878 does not disclose details of the combination of the AIS frames. Patent Literature 3, which is an Ethemet® OAM technology, assumes that AIS frames are transmitted or received through paths (LSP, PW) in an upper layer when this technology is applied to an MPLS-TP network. However, when the destination MEPs are not those of the same apparatus (when the paths are not the same), this technology is uncertain about whether it can properly transfer AIS frames to the destination communication apparatus through the paths.

That is, the above technologies have a problem that they cannot provide a communication system, a transmission apparatus, a receiving apparatus, a failure notification method, and a non-transitory, computer-readable medium storing a program which each reduce the load borne to generate failure notification frames.

The present invention has been made in the view of the above program, and a principal object thereof is to provide a communication system, a transmission apparatus, a receiving apparatus, a failure notification method, and a non-transitory, computer-readable medium storing a program which each reduce the load borne to generate failure notification frames.

### SUMMARY OF THE INVENTION

The invention is defined by the appended claims.

### BRIEF DESCRIPTION OF THE DRAWINGS

Fig. 1 is a block diagram showing the configuration of a communication system according to a first embodiment.
Fig. 2 is a block diagram showing the internal configuration of a communication system 1 according to the first embodiment.
Fig. 3A is a diagram showing the configuration of an AIS management table included in the communication apparatus according to the first embodiment.
Fig. 3B is a diagram showing the configuration of an AIS management table included in the communication apparatus according to the first embodiment.
Fig. 3C is a diagram showing the configuration of an AIS management table included in the communication apparatus according to the first embodiment.
Fig. 3D is a diagram showing the configuration of an AIS management table included in the communication apparatus according to the first embodiment.
Fig. 3E is a diagram showing the configuration of an AIS management table included in the communication apparatus according to the first embodiment.
Fig. 4 is a block diagram showing the configuration of a communication system according to a second embodiment.
Fig. 5A is a diagram showing the configuration of an AIS management table included in the communication apparatus according to the second embodiment.
Fig. 5B is a diagram showing the configuration of an AIS management table included in the communication apparatus according to the second embodiment.
Fig. 5C is a diagram showing the configuration of an AIS management table included in the communication apparatus according to the second embodiment.
Fig. 5D is a diagram showing the configuration of an AIS management table included in the communication apparatus according to the second embodiment.
Fig. 5E is a diagram showing the configuration of an AIS management table included in the communication apparatus according to the second embodiment.
Fig. 6 is a block diagram showing an example hardware configuration of a computer system for achieving a communication apparatus according to the present invention.
Fig. 7 is a block diagram showing the configuration of a communication system according to a first embodiment.
Fig. 8 is a block diagram showing an example operation of a typical AIS notification function.

### DETAILED DESCRIPTION OF EXAMPLE EMBODIMENTS

### First Embodiment

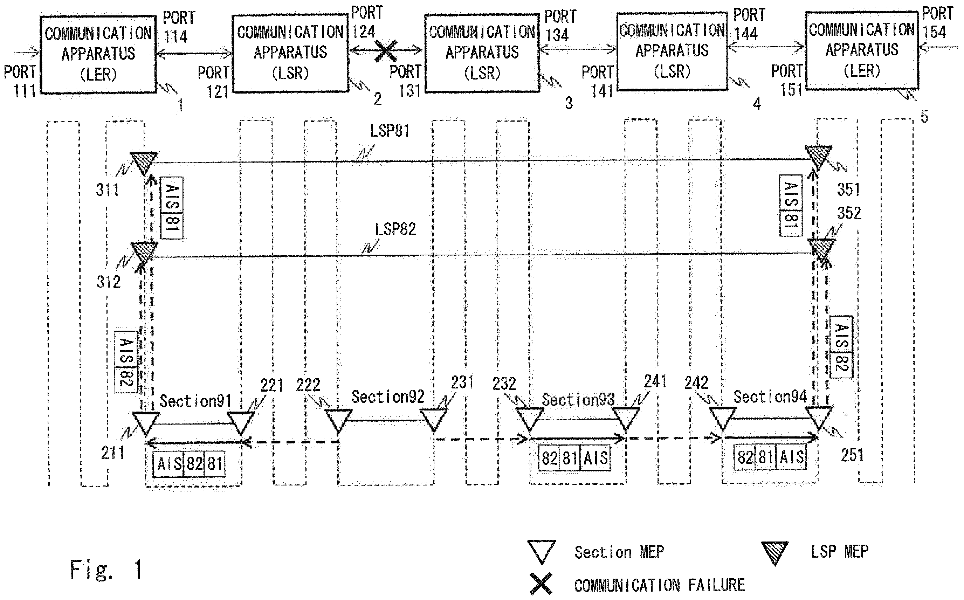

Now, embodiments of the present invention will be described with reference to the drawings. Fig. 1 is a block diagram showing the configuration of a communication system according to the present embodiment. This system forms an MPLS-TP network and includes communication apparatuses 1 to 5. The communication apparatuses 1 and 5 serve as LERs, whereas the communication apparatuses 2 to 4 serve as LSRs. A port 114 of the communication apparatus 1 and a port 121 of the communication apparatus 2 are connected together through a transmission medium. Similarly, a port 124 of the communication apparatus 2 and a port 131 of the communication apparatus 3 are connected together through a transmission medium. A port 134 of the communication apparatus 3 and a port 141 of the communication apparatus 4 are connected together through a transmission medium. A port 144 of the communication apparatus 4 and a port 151 of the communication apparatus 5 are connected together through a transmission medium. A port 111 of the communication apparatus 1 and a port 154 of the communication apparatus 5 are connected to apparatuses outside the MPLS-TP network.

LSP MEPs 311 and 312 are set at the communication apparatus 1, whereas LSP MEPs 351 and 352 are set at the communication apparatus 5. An LSP 81 is constructed between the LSP MEPs 311 and 351, whereas an LSP 82 is constructed between the LSP MEPs 312 and MEP352. Sections 91, 92, 93, and 94 are constructed between the adjacent apparatuses. The sections have SECTION MEPs (211, 221, 222, 231, 232, 241, 242, and 251) as the endpoints thereof.

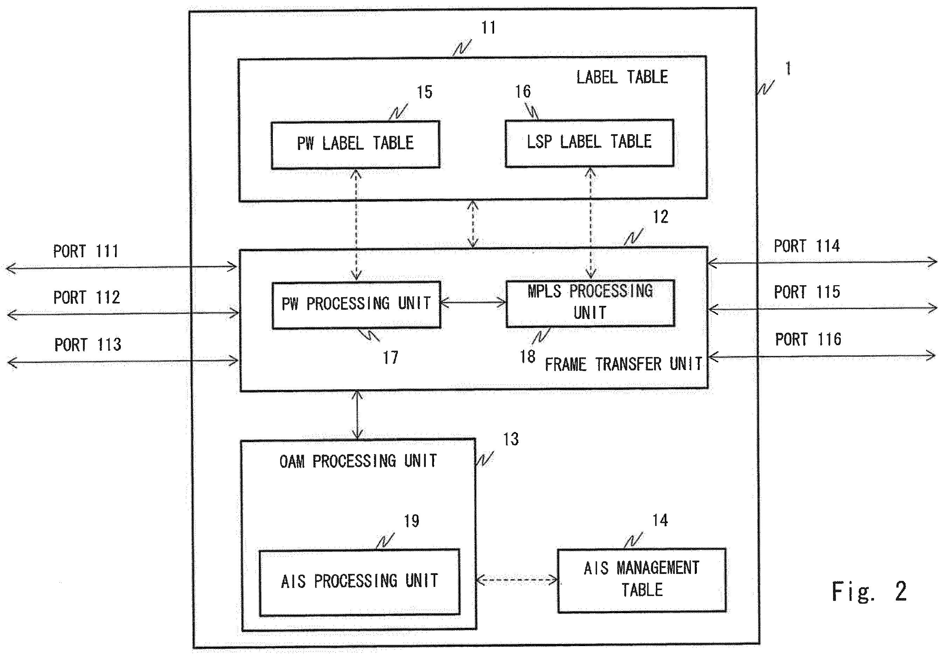

Next, the internal configuration of the communication apparatuses 1 to 5 will be described. Fig. 2 is a block diagram showing the internal configuration of the communication apparatus 1. The communication apparatus 1 includes a label table 11, a frame transfer unit 12, an OAM processing unit 13, and an AIS management table 14.

The label table 11 includes a PW label table 15 and an LSP label table 16. The PW label table 15 includes multiple entries having, as fields, information about a frame header or port and information about a PW label. The PW label table 15 is referred to by a PW processing unit 17. The LSP label table 16 includes information about input labels. Specifically, the LSP label table 16 includes multiple entries having, as fields, information about LSP labels, information about output labels, information about a label processing action, and information about output ports. The LSP label table 16 is referred to by an MPLS processing unit 18.

The frame transfer unit 12 includes the PW processing unit 17 and the MPLS processing unit 18. The PW processing unit 17 performs labeling (label search, label push, label pop, label swap, TTL operation) according to the existing PWE3 standard. Similarly, the MPLS processing unit 18 performs labeling according to the MPLS standard. The PW processing unit 17 and the MPLS processing unit 18 also add or delete headers to or from the server layer and the client layer.

The frame transfer unit 12 determines which of user frame data and an OAM frame a frame received from another apparatus is. If the frame is an OAM frame, the frame transfer unit 12 transfers the OAM frame to the OAM processing unit 13.

The frame transfer unit 12 also performs labeling on a frame received from the OAM processing unit 13 (AIS processing unit 19). The frame transfer unit 12 then transmits the labeled frame to another apparatus through any port.

On the other hand, the frame transfer unit 12 (PW processing unit 17, MPLS processing unit 18) does not perform the above labeling on an OAM frame of the section layer received by the OAM processing unit 13 (AIS processing unit 19).

The OAM processing unit 13 includes the AIS processing unit 19 and performs various OAM functions defined by the MPLS-TP standard.

When a failure is detected, the AIS processing unit 19 refers to an AIS management table 14 to acquire the identifiers of LSPs serving as the transmission paths of AIS frames (LSP IDs) and ports from which the frames are to be output. The AIS processing unit 19 inserts the acquired LSP IDs into the AIS frame and then provides the resulting AIS frame to the frame transfer unit 12 along with information about the output ports.

Further, when the AIS processing unit 19 receives an AIS frame from another communication apparatus, it determines whether the communication apparatus 1 is a terminating apparatus, based on the AIS management table 14 and LSP IDs included in the AIS frame. If the AIS processing unit 19 determines that the communication apparatus 1 is a terminating apparatus, it notifies the OAM processing unit 13 that it has received the AIS frame. At this time, the OAM processing unit 13 masks the failure state of the path determined from the notification information. If the AIS processing unit 19 determines that the communication apparatus 1 is not a terminating apparatus, it determines the destination of the AIS frame (yet another communication apparatus) from the AIS management table 14.

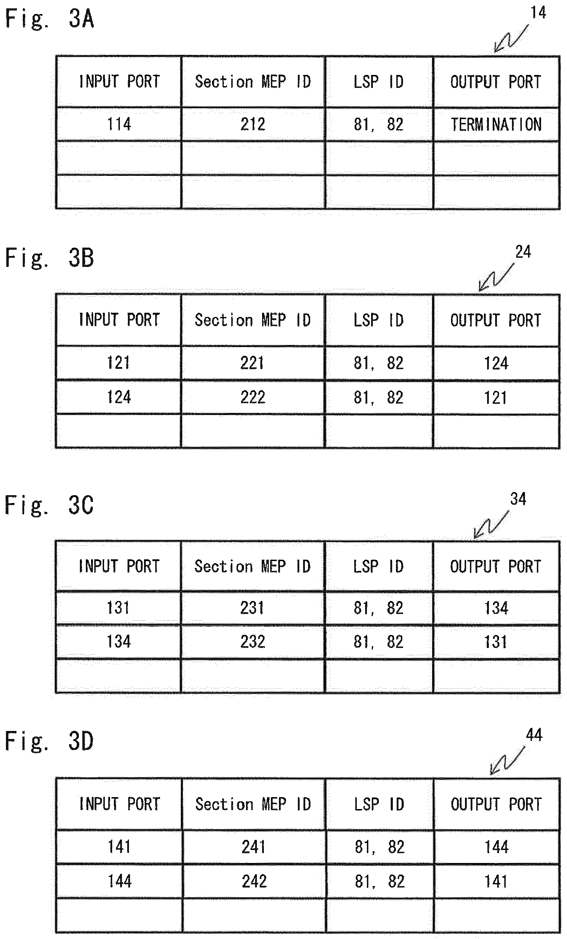

The AIS management table 14 is referred to by the AIS processing unit 19 when a failure is detected or when the AIS processing unit 19 receives an AIS frame from another communication apparatus. Details of the AIS management table 14 will be described with reference to Figs. 3A to 3E.

The communication apparatuses 2 to 5 have the same configuration as that shown in Fig. 2. The communication apparatus 2 includes a label table 21, a frame transfer unit 22, an OAM processing unit 23, and an AIS management table 24 which correspond to the above processing units. The communication apparatus 3 includes a label table 31, a frame transfer unit 32, an OAM processing unit 33, and an AIS management table 34 which correspond to the above processing units. The communication apparatus 4 includes a label table 41, a frame transfer unit 42, an OAM processing unit 43, and an AIS management table 44 which correspond to the above processing units. The communication apparatus 5 includes a label table 51, a frame transfer unit 52, an OAM processing unit 53, and an AIS management table 54 which correspond to the above processing units.

Referring to Fig. 1 again and to Figs. 3A to 3E, the operations of the communication apparatuses will be described. Figs. 3A to 3E show the configurations of the AIS management tables (14, 24, 34, 44, and 54) included in the apparatuses of Fig. 1.

Figs. 3B to 3D show the configurations of the AIS management tables (24, 34, and 44) of the communication apparatuses 2 to 4 serving as LSRs. In the respective management tables, input port, SECTION MEP ID, LSP ID, and output port are defined as fields. Input port represents information about a port to which a section monitored by the apparatus is connected. SECTION MEP ID represents information identifying an MEP of the section monitored by the apparatus. LSP ID represents information about the identifiers of LSPs over which AIS frames are to be output when a failure occurs in the section monitored by the apparatus. Output port represents the numbers of a port from which AIS frames are to be output when a failure occurs in the section monitored by the apparatus.

If the input port and output port of an LSP differ from each other, a combination of the LSP ID of the LSP and an output port is registered as an entry. For example, in Fig. 3B, the communication apparatus 2 monitors the section (SECTION 91) having the SECTION MEP 221 as an endpoint thereof through the port 121 and, when a failure occurs in the section, outputs AIS frames over the LSPs 81 and 82 serving as transmission paths from the output port 124.

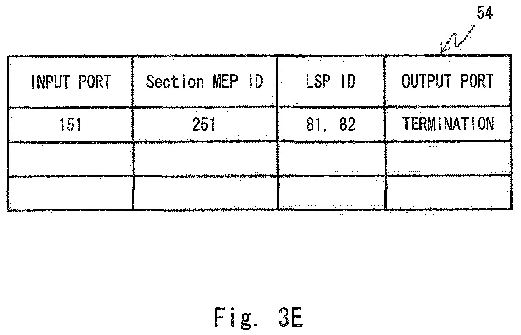

Figs. 3A and 3E show the configurations of the AIS management tables (14, 54) of the communication apparatuses 1 and 5 serving as LERs. The field configuration of these tables is the same as that of Figs. 3B to 3D. The communication apparatuses 1 and 5 serving as LERs terminate the LSPs. Accordingly, information indicating "termination" is registered in the output port field. Since the input ports for the LSPs 81 and 82 are the same (114), the two LSP IDs are registered in the same entry in Fig. 3A.

Entries in the AIS management table and each label table are determined according to an MPLS-TP network to be constructed. In the present embodiment, it is assumed that entries are already registered. Note that the PW label table may be constructed by, based on the client layer transmission technology, learning about the relationship among the header, port, and PW label of a frame and dynamically registering entries. The communication apparatuses 1 to 5 according to the present embodiment can adapt to such a PW label table.

Next, an AIS frame transfer operation will be described with reference to Fig. 1. Hereafter, there will be described a case where a bidirectional communication failure occurs between the communication apparatuses 2 and 3.

First, the communication apparatus 3 detects linking-down at the port 131. Or, when the communication apparatus 3 is performing continuity check, which is one of the MPLS-TP OAM functions, at the SECTION MEP 231, it detects loss of continuity (LOC). The AIS processing unit 39 searches the AIS management table 34 using, as a key, the port 131 or the SECTION MEP 231, which has detected the failure. The AIS processing unit 39 retrieves the LSPs 81 and 82, which are the identifiers of LSPs over which the AIS processing unit 39 is to transmit an AIS frame, and the output port number 134.

The AIS processing unit 39 then generates an AIS frame including information about the LSPs 81 and 82 serving as transmission paths and provides the resulting AIS frame to the frame transfer unit 32 along with information about the output port number 134. At this time, the AIS processing unit 39 does not generate AIS frames corresponding to the LSPs 81 and 82, respectively, but generates an AIS frame including information about the LSPs 81 and 82. In other words, the AIS processing unit 39 does not generate an AIS frame for each LSP but generates one AIS frame including information about the LSPs.

While the failure continues, an AIS frame continues to be transmitted in constant cycles defined by the MPLS-TP standard. In this way, the AIS processing unit 39 periodically generates an AIS frame in such cycles and provides the generated AIS frame to the frame transfer unit 32.

The frame transfer unit 32 does not perform section layer labeling on the AIS frame provided by the AIS processing unit 39. The frame transfer unit 32 adds the header of the transmission medium to the AIS frame and outputs the resulting AIS frame from the output port 134.

In the typical AIS transfer process described with reference to Fig. 8, AIS frames corresponding to the LSPs are generated, although the ports for outputting AIS frames over the LSPs 581 and 582 have the same. Thus, as the number of LSPs increases, the communication apparatus bears a larger processing load to generate AIS frames. On the other hand, the communication apparatus according to the present embodiment only has to generate one AIS frame in each of the cycles, without depending on the number of LSPs. This reduces the processing load which the communication apparatus bears to generate an AIS frame.

The format of an AIS frame only has to conform to the MPLS-TP standard. In this case, since the section layer does not require an LSP label or PW label, the format only has to have a configuration where an LSP ID field is added to a GAL header, an ACH header, and an AIS payload.

The MPLS-TP standard allows a TLV field for storing particular information to be defined in an AIS frame. For this reason, a field for storing an LSP ID may be defined in the TLV field. Note that the header format of an AIS frame transmitted or received to or from another apparatus is changed according to the transmission medium, when necessary.

The communication apparatus 4 receives the AIS frame from the port 141. The frame transfer unit 42 of the communication apparatus 4 determines which of a user data frame and an OAM frame the frame is and then transfers the AIS frame to the OAM processing unit 43. The OAM processing unit 43 transfers the AIS frame to the AIS processing unit 49, since the received frame is an AIS frame. The AIS processing unit 49 searches the AIS management table 44 using, as a key, the port 141, from which the AIS frame has been input. The AIS processing unit 49 retrieves the identifier of LSPs over which the AIS frame is to be transmitted, and an output port number.

The AIS processing unit 49 then compares the LSP IDs stored in the received AIS frame with the LSP IDs retrieved. If both are matched, the AIS processing unit 49 determines that it will transmit the AIS frame from the output port retrieved. In contrast, if there are no matching LSP IDs, the AIS processing unit 49 discards the AIS frame. If an entry having multiple LSP IDs registered therein is hit in the search of the AIS management table 44, the AIS processing unit 49 compares each of the LSP IDs with the LSP IDs in the AIS frame to determine whether to transmit the AIS frame from the output port described in the entry. If any LSP ID in the AIS frame matches any retrieved LSP ID, the AIS processing unit 49 transmits the AIS frame; if there is no matching LSP ID, it discards the AIS frame without transmitting it from the output port. If the LSP IDs in the AIS frame match LSP IDs in multiple entries and thus the AIS frame is to be output from multiple output ports, the AIS processing unit 49 replicates the AIS frame so that the number of AIS frames becomes equal to the number of the output ports. If the LSP IDs are matched and if the output port is "termination," a termination process to be discussed later is performed.

Note that the AIS processing unit 49 does not change the LSP ID information in the AIS frame during the replication and transfers the intact AIS frames. This is intended to reduce the processing load that the AIS processing unit 49 bears to replicate the AIS frame.

LSP ID information to be originally stored in the AIS frame is only the matching LSP ID in the entry which has been hit in the search by the AIS processing unit 49. For this reason, the AIS processing unit 49 may delete unnecessary LSP IDs from the AIS frame. However, if the AIS processing unit 49 deletes such LSP IDs, it bears a larger processing load. Nevertheless, since the length of the AIS frame can be reduced, an effect of reducing traffic volume is produced.

In this example, the AIS processing unit 49 searches the AIS management table 44 using the port 141 as a search key. The AIS processing unit 49 then retrieves the LSP IDs 81 and 82 and the output port 144. Since the retrieved LSP IDs and the LSP IDs in the received AIS frame are matched, the AIS processing unit 49 determines that it will transmit the received intact AIS frame from the port 144. The AIS processing unit 49 then provides the AIS frame to the frame transfer unit 42 along with information about the output port 144. The frame transfer unit 42 transmits the AIS frame from the port 144.

The communication apparatus 3 transmits an AIS frame in the cycles defined by the MPLS-TP standard. For this reason, the communication apparatus 4 only has to perform the above process each time it receives an AIS frame from the communication apparatus 3. In other words, the communication apparatus 4 does not generate an AIS frame each time it receives an AIS frame from the communication apparatus 3.

Next, the communication apparatus 5 receives the AIS frame from the communication apparatus 4 through the port 151. The frame transfer unit 52 of the communication apparatus 5 performs an OAM frame determination and provides this AIS frame to the AIS processing unit 59.

The AIS processing unit 59 searches the AIS management table 54 using the input port 151 as a key. The AIS processing unit 59 then retrieves the LSP IDs 81 and 82 and information indicating a "termination" as output port. The AIS processing unit 59 then determines whether the LSP IDs (81, 82) retrieved and the LSP IDs (81, 82) stored in the AIS frame are matched. Since both are matched, the AIS processing unit 59 refers to the output port information retrieved.

Since the output port is "termination," the AIS processing unit 59 determines that the communication apparatus 5 is the terminations of the LSPs. Based on the determination, the communication apparatus 5 stops transferring the AIS frame and performs a termination process. The AIS processing unit 59 notifies the OAM processing unit 53 that it has received the AIS frame including the information about the LSP IDs 81 and 82.

Due to this notification, the OAM processing unit 53 recognizes the LSPs (81, 82) over which the AIS frame should be transmitted. The OAM processing unit 53 then performs an OAM process as if it had received the AIS frame from the LSPs 81 and 82. Specifically, the OAM processing unit 53 masks the failure state [loss of continuity (LOC)] of the LSPs 81 and 82.

Since the respective communication apparatuses perform the above processes, the system shown in Fig. 1 can satisfy the AIS function requirement of the MPLS-TP standard, as well as can solve the above AIS function problem which the typical MPLS-TP network has.

Note that in the configuration of Fig. 1, the communication apparatus 2 must transmit an AIS frame to the communication apparatus 1. In this case, the communication apparatus 2 only has to perform a process similar to that of the communication apparatus 3. The communication apparatus 1, which terminates the LSPs, only has to perform a process similar to that of the communication apparatus 5.

Next, effects of the communication apparatuses according to the present embodiment will be described in comparison with the typical transfer process according to the MPLS-TP standard.

As described above, the AIS frame transfer process shown in Fig. 8 has the problem that the communication apparatuses (AIS frame transmission apparatuses, AIS frame relay apparatuses, and AIS frame receiving apparatuses) bear a larger processing load and the problem that the MPLS-TP standard may not be complied with. Further, in the AIS frame transfer process shown in Fig. 8, even when the same LSP is multiplexed, a communication apparatus which has detected a failure generates an AIS frame for each LSP and transmits all the generated AIS frames. This causes a problem that the traffic volume in the network is increased with increases in the number of LSPs and thus the band is compressed.

On the other hand, the communication apparatuses according to the present embodiment generates only the number of AIS frames corresponding to the number of output ports from which generated AIS frames are to be output, without depending on the number of LSPs. Thus, it is possible to reduce the load that each communication apparatus bears to generate AIS frames. Further, since the number of AIS frames to be generated is reduced, the possibility that each communication apparatus can generate AIS frames within a predetermined transmission cycle is increased. Furthermore, since the number of AIS frames transmitted by the communication apparatuses is reduced, the traffic volume can be reduced.

Further, the communication apparatuses which transfer AIS frames can reduce the number of AIS frames to be transferred. This is because a communication apparatus serving as a transmitter generates only the number of AIS frames corresponding to the number of output ports from which generated AIS frames are to be output. Thus, the processing load borne by a relay apparatus (a communication apparatus which transfers an AIS frame) can also be reduced.

Furthermore, in the present embodiment, a communication apparatus which terminates the AIS frame can reduce the number of AIS frames to be received, compared to that in the AIS frame receiving method described with reference to Fig. 8. Thus, the processing load borne by the terminating apparatus can be reduced.

That is, it is possible to reduce any of the processing loads borne by the transmission apparatuses, the relay apparatuses, and the termination apparatuses and to reduce the volume of traffic which occurs in the MPLS-TP network.

### Second Embodiment

A system according to the present embodiment is characterized in that it can solve the above problem even when the system includes apparatuses having different LSP endpoints.

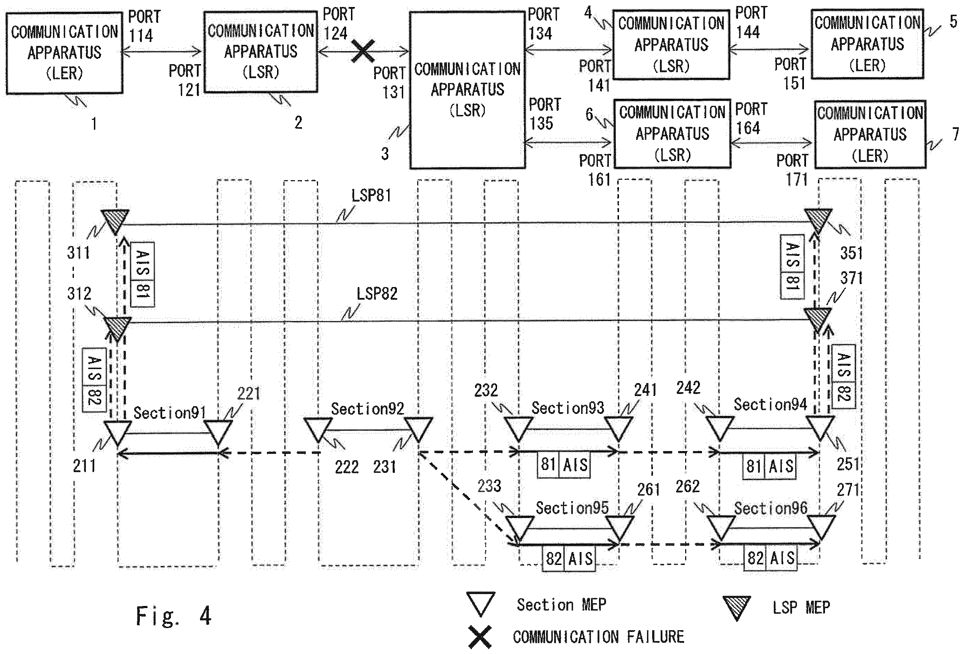

Fig. 4 is a block diagram showing the configuration of a communication system according to the present embodiment. This system forms an MPLS-TP network and includes communication apparatuses 1 to 7. The communication apparatuses 1, 5, and 7 serve as LERs, whereas the communication apparatuses 2 to 4 and 6 serve as LSRs. As shown in Fig. 4, the communication apparatuses are connected together through ports.

LSP MEPs 311 and 312 are set at the communication apparatus 1; an LSP MEP 351 is set at the communication apparatus 5; and an LSP MEP 371 is set at the communication apparatus 7. Sections 91 to 96 are constructed between the adjacent apparatuses. The section 95 is set between the communication apparatuses 3 and 6. The section 96 is set between the communication apparatuses 6 and 7.

The communication apparatuses 1 to 7 only have to have the same internal configuration as that shown in Fig. 2. The communication apparatus 6 includes a label table 61, a frame transfer unit 62, an OAM processing unit 63, and an AIS management table 64 which correspond to the processing units shown in Fig. 2. The communication apparatus 7 includes a label table 71, a frame transfer unit 72, an OAM processing unit 73, and an AIS management table 74 which correspond to the processing units shown in Fig. 2.

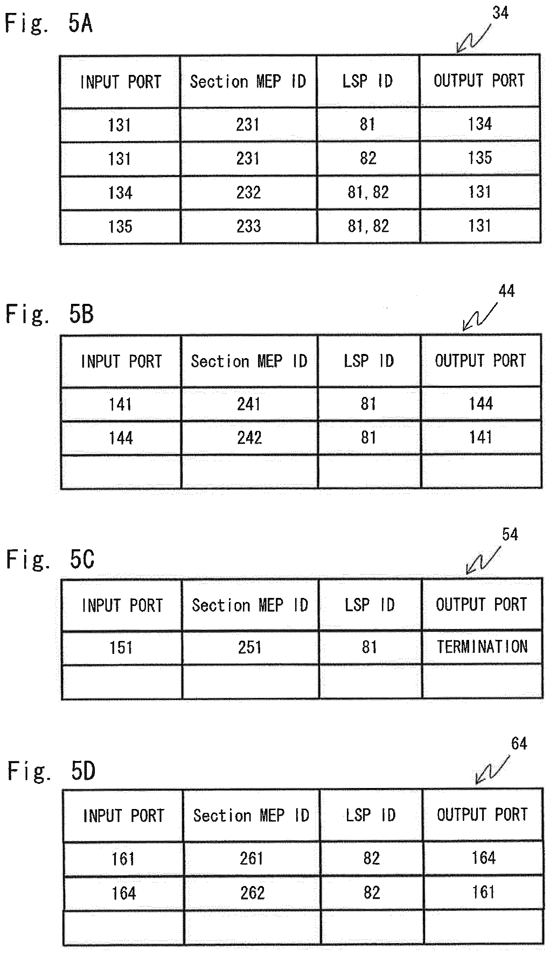

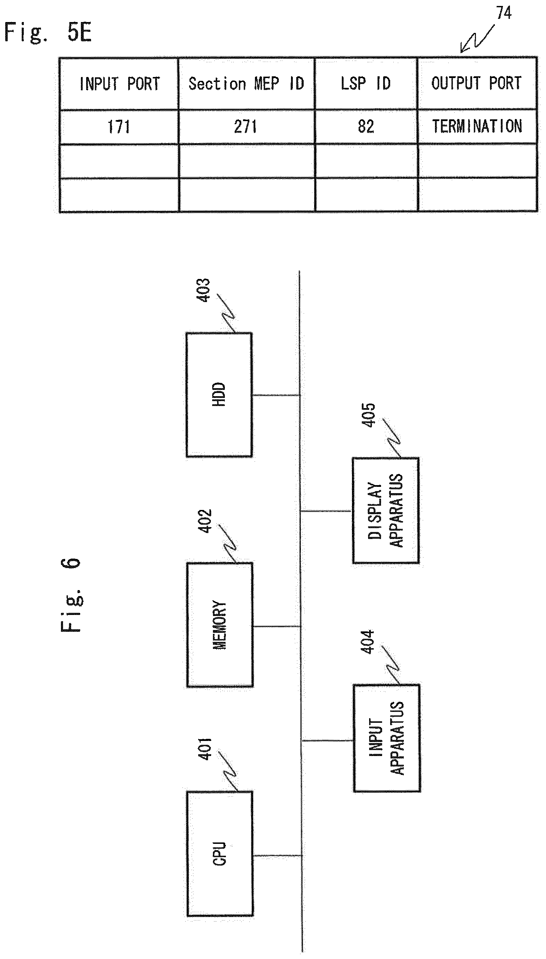

Figs. 5A to 5E are diagrams showing the AIS management tables in the communication apparatuses shown in Fig. 4. Note that Fig. 5 shows the AIS management tables (34, 44, 54, 64, and 74) in the communication apparatuses 3 to 7. The configurations of the AIS management tables shown in Figs. 5A to 5E are similar to those shown in Figs. 3A to 3E.

Next, an AIS frame transfer operation will be described with reference to Fig. 4. There will be described a case where a bidirectional communication failure occurs between the communication apparatuses 2 and 3.

First, the communication apparatus 3 detects a communication failure. The AIS processing unit 39 of the communication apparatus 3 searches the AIS management table 34 using, as a key, a port 131 or SECTION MEP 231, which is involved in the failure. The AIS processing unit 39 then retrieves two entries. One of the entries is a combination of an LSP ID and an output port (LSP ID 81, 134); the other entry is a combination of an LSP ID and an output port (LSP ID 82, 135).

Since the retrieved entries have output ports different from each other, the AIS processing unit 39 generates two AIS frames. Information about the LSP ID 81 is inserted into one of the AIS frames. The AIS processing unit 39 provides the AIS frame including the information about the LSP ID 81 to the frame transfer unit 32 along with information about the output port 134. Information about the LSP ID 82 is inserted into the other AIS frame. The AIS processing unit 39 provides the AIS frame including the information about the LSP ID 82 to the frame transfer unit 32 along with information about the output port 135.

The frame transfer unit 32 transmits the AIS frame including the information about the LSP ID 81 from the output port 134. The frame transfer unit 32 also transmits the AIS frame including the information about the LSP ID 82 from the output port 135.

The communication apparatuses 4 and 6 (LSRs) and the communication apparatuses 5 and 7 (LERs) receive these AIS frames and perform processes similar to those in the first embodiment.

As seen above, the communication apparatus 3 serving as an LSR can generate an AIS frame for each section even when AIS frames are to be transmitted over the LSPs from multiple output ports. Thus, even when the endpoints of the LSP exist in different communication apparatuses, it is possible to transfer an AIS frame accurately.

There will be considered a case where a failure occurs in the section 91 of this configuration. In this case, the communication apparatus 2 transmits an AIS frame including information about the LSP IDs 81 and 82 to the communication apparatus 3. The communication apparatus 3 replicates the received AIS frame, transfers one of the replicated AIS frames to the communication apparatus 4, and transfers the other AIS frame to the communication apparatus 6. The communication apparatus 5 serving as a termination can recognize that it is the termination of the LSP 81 by searching the AIS management table 54. Accordingly, the communication apparatus 5 performs only a termination process related to the LSP 81. Similarly, the communication apparatus 7 serving as a termination can recognize that it is the termination of the LSP 82 by searching the AIS management table 74. Accordingly, the communication apparatus 7 performs only a termination process related to the LSP 82.

### Third Embodiment

The communication apparatuses according to the first and second embodiments handle transfer of an AIS frame in the layer (transport path layer) related to the LSP. Communication apparatuses according to the present embodiment are characterized in that the communication apparatuses can transfer an AIS frame through multiple layers. Specifically, the communication apparatuses according to the present embodiment transfer an AIS frame even in configurations, such as a single segment-PW model and a multi-segment-PW model [PSME (PW SPME ME), LSME (LSP SPME MESSAGE)].

Since the configurations of the communication apparatuses are approximately similar to that shown in Fig. 2, only the differences will be described and detailed description thereof will be omitted. In the above communication models (e.g., single segment-PW model), a communication apparatus which has detected a failure only has to insert, into an AIS frame, the identifiers of paths (LSP ID, PW ID), as well as information identifying layers. Each communication apparatus only has to set, in the AIS management table thereof, fields for the identifiers of the paths (LSP ID, PW ID), as well as fields related to the layers of the paths to be used. A communication apparatus which has detected a failure may make a comparison between the fields related to the layers of the path when searching the AIS management table.

By performing the above extension, the present invention can be also applied to various types of network reference models described in the standard.

### Fourth Embodiment

Communication apparatuses according to the present embodiment are characterized in that they insert, into an AIS frame, the identifiers of paths (LSP IDs), as well as various types of information related to a failure. Since the configurations of the communication apparatuses according to the present embodiment are also approximately similar to that shown in Fig. 2, only the differences will be described and detailed description thereof will be omitted.

A communication apparatus which has detected a failure inserts LSP IDs, as well as various types of information. Examples of information to be inserted include the identifier of the failed section and the failure factor (LOC, linking-down, or the like). The other processes are similar to those in the first embodiment.

The AIS frame is transferred to a termination apparatus. The communication apparatus serving as a termination can grasp the location where the failure has occurred, the failure factor, and the like.

In typical AIS transfer systems defined in the standard, a path endpoint (LSP MEP) apparatus which has received an AIS frame cannot grasp the location where the failure has occurred or the failure factor. For this reason, in these systems, the administrator acquires the location where the failure has occurred or failure factor by analyzing failure information gathered by a network management system (NMS). An NMS is a system for centrally monitoring apparatuses and lines forming an MPLS-TP network. However, increases in the size of the MPLS-TP network make it difficult for the administrator to analyze the information gathered by the NMS. For this reason, insertion of information related to an failure into an AIS frame can reduce the load on the administrator. That is, it is possible to reduce the time and effort required for the administrator to analyze the failure information gathered by the NMS, or to make such analysis unnecessary.

While the invention of the present application has been described with reference to the embodiments, the invention is not limited thereto. Various changes understandable for those skilled in the art can be made to the configuration or details of the invention of the present application without departing from the scope of the invention. For example, while transfer of an AIS frame by the communication apparatuses has been described above, the frame to be transferred need not necessarily be an AIS frame and may be a LCK (lock reporting or locked signal) frame. In this case, each communication apparatus only has to transfer an LCK frame in place of an AIS frame and to perform a process similar to the above process.

The processes performed by the processing units (frame transfer unit 12, OAM processing unit 13, PW processing unit 17, MPLS processing unit 18, and AIS processing unit 19) of the communication apparatus 1 shown in Fig. 2 may be embodied as a program which runs on any computer. This program may be stored in any type of non-transitory, computer-readable medium and then provided to the computer. Examples of the non-transitory, computer-readable medium include various types of tangible storage media. More specific examples of the non-transitory, computer-readable medium include magnetic storage media (e.g., flexible disks, magnetic tapes, hard disk drives), magneto-optical storage media (e.g., magneto-optical disks), compact disc read-only memories (CD-ROMs), CD-Rs, CD-R/Ws, semiconductor memories (e.g., mask ROMs, programmable ROMs (PROMs), erasable PROMs (EPROMs), flash ROMs, and random access memories (RAMs). The program may be provided to the computer by any type of transitory, computer-readable medium. Examples of the transitory, computer-readable medium include electric signals, optical signals, and electromagnetic waves. The transitory, computer-readable medium can provide the program to the computer via a wired communication channel such as an electric line or an optical fiber, or a wireless communication channel.

The information in the tables (label table 11, AIS management table 14) is stored in such a computer-readable medium.

Fig. 6 shows an example hardware configuration in a case where the processing units of the communication apparatus 1 operate as a program. For example, this hardware configuration includes a central processing unit (CPU) 401 and a memory 402. The CPU 401 and the memory 402 are connected to a hard disk drive (HDD) 403 serving as an auxiliary storage device through a bus. This system typically includes user interface hardware. Examples of the user interface hardware include an input apparatus 404, such as a pointing device for doing input (mouse, joystick, etc.), and a display apparatus 405, such as a liquid crystal display for showing visual data to the user. A storage medium such as the HDD 403 can store a computer program for giving an instruction to the CPU 401 or the like in cooperation with the operating system and performing the functions of the units of this system. That is, this program is loaded into the memory 402, and the CPU 401 performs processes in accordance with the program and collaborates with the other hardware configurations, forming the blocks of the communication apparatus 1. As seen above, the processes performed by the communication apparatus 1 may be achieved when the CPU 401 executes the predetermined program. Alternatively, all the processes and tables of the communication apparatus may be achieved by an LSI.

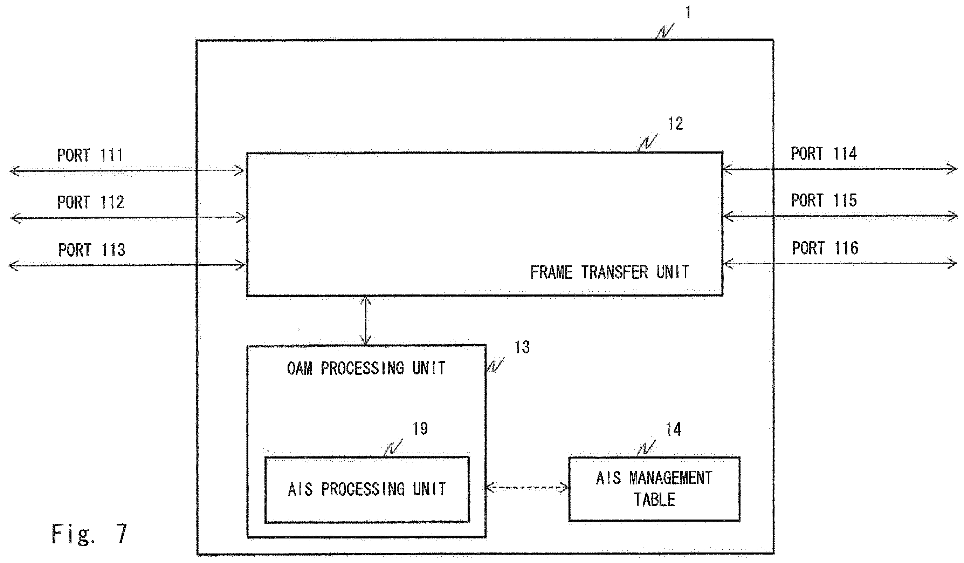

Referring to Fig. 7, the present invention will be outlined again. Fig. 7 is a block diagram schematically showing the communication apparatus 1 according to the first embodiment of the present invention.

As described above, the AIS processing unit 19 (corresponding to the transmission frame processing unit and the received frame processing unit) refers to the AIS management table 14 and generates the AIS frames corresponding to the number of output ports of the LSPs over which the AIS frames are to be transmitted. That is, the AIS processing unit does not generate the same number of AIS frames as the number of LSPs.

The frame transfer unit 12 transmits or receives an AIS frame without performing labeling of the section layer.

Thus, it is possible to reduce the number of AIS frames to be generated and thus to reduce the load that the transmission apparatus bears to generate AIS frames. Further, since the number of AIS frames to be transmitted is reduced, it is possible to reduce the loads borne to transfer and receive AIS frames.

### REFERENCE SIGNS LIST

- 1: communication apparatus (LER)
- 2 to 4: communication apparatus (LSR)
- 5: communication apparatus (LER)
- 6: communication apparatus (LSR)
- 7: communication apparatus (LER)
- 11: label table
- 12: frame transfer unit
- 13: OAM processing unit
- 14: AIS management table
- 15: PW label table
- 16: LSP label table
- 17: PW processing unit
- 18: MPLS processing unit
- 19: AIS processing unit
- 81, 82: LSP
- 91 to 96: section
- 111,112,113,114,115,116,121,124,131,134,135,141,144,151,161,164,171 211, 221, 222, 231, 232, 233, 241, 242, 251, 261, 262, 271: SECTION MEP
- 311,312,351,352,371: LSP MEP
- 401: CPU
- 402: memory
- 403: HDD
- 404: input apparatus
- 405: display apparatus

## Claims

1. A communication system in MPLS-TP network, the communication system comprising:
a transmission apparatus (231, 232) configured to, when a failure is detected, transmit an AIS frame; and
a receiving apparatus configured to receive the AIS frame, wherein
the transmission apparatus comprises:
transmission frame processing means holding first section information about a section and paths over each of which AIS frame is to be output when a failure occurs in the section and configured to, when a failure occurs, insert information about the paths into the AIS frame based on a location of the failure and the first section information, and determine a port from which the notification frame is to be output; and
frame transmission means configured to receive the AIS frame and information about the port from the transmission frame processing means and to transmit the AIS frame from the port,
the receiving apparatus comprises:
frame transmission and reception means configured to receive the AIS frame and to transfer the AIS frame; and
received frame processing means configured to, when the AIS frame is received, inhibit alarm related to the failure of the paths inserted into the AIS frame or control transfer of the AIS frame according to whether the receiving apparatus is a terminating apparatus.

2. The communication system according to claim 1, wherein
the transmission apparatus holds a first table including the first section information,
the first table is storing one or more entries as the first section information, each of the entries having, as fields, an input port connected to a section, a section endpoint of the section, paths over each of which the AIS frame is to be output, and an output port connected to the section, and
when a failure is detected, the transmission frame processing means searches the first table using, as a key, one of an input port involved in a location of the failure and a section endpoint involved in the failure location, inserts information about retrieved paths into the AIS frame, and determines that the retrieved output port is a port from which the AIS frame is to be output.

3. The communication system according to claim 2, wherein
the receiving apparatus holds a second table including the second section information and having the same fields as the first table,
when the AIS frame is received, the received frame processing means searches the second table using, as a key, a port from which the AIS frame has been input and, when retrieved output port information is a value indicating a termination of a path, masks a failure state based on the AIS frame, and
when the output port information is not a value indicating a termination of a path, the received frame processing means determines whether a retrieved path and a path inserted into the AIS frame are matched, when the path are matched, makes a determination that the retrieved output port is a transfer destination of the AIS frame, and notifies the frame transmission and reception means of the determination.

4. The communication system according to any one of claim 1 or 3, wherein the transmission frame processing means inserts at least one of the failure location and a type of the failure into the AIS frame.

5. The communication system according to claim 3 or 4, wherein when the received frame processing means retrieves a plurality of entries including information about different output ports by searching the table, the received frame processing means replicates the AIS frame so that the number of the notification frames becomes equal to the number of the entries.

6. The communication system according to any one of claims 3 to 5, wherein the received frame processing means updates path information inserted into the AIS frame in accordance with a search result of the second table.

7. A transmission apparatus (231, 232) in MPLS-TP network, the transmission apparatus comprising:
transmission frame processing means holding first section information about a section and paths over each of which AIS frame
is to be output when a failure occurs in the section and configured to, when a failure occurs, insert information about the paths for failure notification into the AIS frame based on a location of the failure and the first section information, and determine a port from which the AIS frame is to be output; and
frame transmission means configured to receive the AIS frame and information about the port from the transmission frame processing means and to transmit the AIS frame from the port.

8. A communication apparatus (4,5) making a notification indicating detection of a failure in a section and receiving an AIS frame having information about paths over each of which AIS frame is to be output when a failure occurs in the section embedded therein in MPLS-TP network, the communication apparatus comprising:
a table including section information about a connected section;
frame transmission and reception means configured to receive the AIS frame and to transfer the AIS frame; and
received frame processing means configured to, when the AIS frame is received, inhibit alarm related to the failure of the paths inserted into the AIS frame or control transfer of the AIS frame according to whether the communication apparatus is a terminating apparatus.

9. A method for transmitting an AIS frame in MPLS-TP network, the method comprising
when a failure of a section is detected, inserting, into the AIS frame, information about paths over each of which AIS frame is to be output when a failure occurs in the section determined from one of an input port involved in a location of the failure and a section endpoint of the section involved in the failure location and outputting the AIS frame from the output port determined from the input port or the section endpoint involved in the failure location.

10. A non-transitory computer-readable medium storing a program for causing a computer to perform the method for transmitting an AIS frame according to claim 9.

## Patentansprüche

1. Kommunikationssystem in einem MPLS-TP-Netzwerk, wobei das Kommunikationssystem Folgendes umfasst:
eine Sendevorrichtung (231, 232), konfiguriert zum Senden, wenn eine Störung erkannt wird, eines AIS-Frame; und
eine Empfangsvorrichtung, konfiguriert zum Empfangen des AIS-Frame, wobei die Sendevorrichtung Folgendes umfasst:
Sendeframe-Verarbeitungsmittel, die erste Sektionsinformationen über eine Sektion und Pfade enthalten, über die der AIS-Frame auszugeben ist, wenn eine Störung in der Sektion auftritt, und konfiguriert zum Einfügen, wenn eine Störung auftritt, von Informationen über die Pfade in den AIS-Frame auf der Basis eines Orts der Störung und der ersten Sektionsinformationen, und Bestimmen eines Ports, von dem der Benachrichtigungsframe auszugeben ist; und
Frame-Sendemittel, konfiguriert zum Empfangen des AIS-Frame und von Informationen über den Port von dem Sendeframe-Verarbeitungsmittel und zum Senden des AIS-Frame von dem Port,
wobei die Empfangsvorrichtung Folgendes umfasst:
Frame-Sende- und -Empfangsmittel, konfiguriert zum Empfangen des AIS-Frame und zum Übertragen des AIS-Frame; und
Empfangsframe-Verarbeitungsmittel, konfiguriert zum Sperren, wenn der AIS-Frame empfangen wird, eines Alarms in Bezug auf die Störung der Pfade, eingeführt in den AIS-Frame, oder zum Steuern der Übertragung des AIS-Frame je nachdem, ob die Empfangsvorrichtung eine Terminierungsvorrichtung ist.

2. Kommunikationssystem nach Anspruch 1, wobei
die Sendevorrichtung eine erste Tabelle mit den ersten Sektionsinformationen enthält,
die erste Tabelle ein oder mehrere Einträge als erste Sektionsinformationen speichert, wobei jeder der Einträge als Felder einen mit einer Sektion verbundenen Eingangsport, einen Sektionsendpunkt der Sektion, Pfade, über die der AIS-Frame jeweils auszugeben ist, und einen mit der Sektion verbundenen Ausgabeport hat, und
das Sendeframe-Verarbeitungsmittel bei Erkennung einer Störung die erste Tabelle mittels eines an einem Ort der Störung beteiligten Eingangsports oder eines am Störungsort beteiligten Sektionsendpunkts als Schlüssel durchsucht, Informationen über abgerufene Pfade in den AIS-Frame einfügt und feststellt, dass der abgerufene Ausgangsport ein Port ist, von dem der AIS-Frame auszugeben ist.

3. Kommunikationssystem nach Anspruch 2, wobei
die Empfangsvorrichtung eine zweite Tabelle mit den zweiten Sektionsinformationen und mit denselben Feldern wie die erste Tabelle enthält,
das Empfangsframe-Verarbeitungsmittel beim Empfangen des AIS-Frame die zweite Tabelle mittels eines Ports, von dem der AIS-Frame eingegeben wurde, als Schlüssel durchsucht und, wenn die abgerufene Ausgangsportsinformation ein Wert ist, der eine Terminierung eines Pfades anzeigt, einen Fehlerzustand auf der Basis des AIS-Frame maskiert, und
wenn die abgerufene Ausgangsportsinformation kein Wert ist, der eine Terminierung eines Pfades anzeigt, das Empfangsframe-Verarbeitungsmittel feststellt, dass ein abgerufener Pfad und ein in den AIS-Frame eingefügter Pfad miteinander übereinstimmen, feststellt, wenn die Pfade übereinstimmen, dass der abgerufene Ausgangsport ein Übertragungsziel des AIS-Frame ist, und das Frame-Sende- und -Empfangsmittel über die Feststellung benachrichtigt.

4. Kommunikationssystem nach Anspruch 1 oder 3, wobei das Sendeframe-Verarbeitungsmittel den Störungsort und/oder einen Typ der Störung in den AIS-Frame einfügt.

5. Kommunikationssystem nach Anspruch 3 oder 4, wobei, wenn das Empfangsframe-Verarbeitungsmittel mehrere Einträge einschließlich Informationen über unterschiedliche Ausgangsports durch Durchsuchen der Tabelle abruft, das Empfangsframe-Verarbeitungsmittel den AIS-Frame so repliziert, dass die Anzahl von Benachrichtigungsframes gleich der Anzahl der Einträge wird.

6. Kommunikationssystem nach einem der Ansprüche 3 bis 5, wobei das Empfangsframe-Verarbeitungsmittel in den AIS-Frame eingefügte Pfadinformationen gemäß einem Ergebnis des Durchsuchens der zweiten Tabelle aktualisiert.

7. Sendevorrichtung (231, 232) in einem MPLS-TP-Netzwerk, wobei die Sendevorrichtung Folgendes umfasst:
Sendeframe-Verarbeitungsmittel, die erste Sektionsinformationen über eine Sektion und Pfade enthalten, über die ein AIS-Frame jeweils ausgegeben werden soll, wenn eine Störung in der Sektion auftritt, und konfiguriert zum Einfügen, wenn eine Störung auftritt, von Informationen über die Pfade für eine Störungsbenachrichtigung in den AIS-Frame auf der Basis eines Orts der Störung und der ersten Sektionsinformationen, und Bestimmen eines Ports, von dem der AIS-Frame ausgegeben werden soll; und
Frame-Sendemittel, konfiguriert zum Empfangen des AIS-Frame und von Informationen über den Port von den Sendeframe-Verarbeitungsmitteln und zum Senden des AIS-Frame von dem Port.

8. Kommunikationsvorrichtung (4, 5) zum Vornehmen einer Benachrichtigung, die eine Erkennung einer Störung in einer Sektion anzeigt, und zum Empfangen eines AIS-Frame mit Informationen über Pfade, über die ein AIS-Frame jeweils auszugeben ist, wenn eine Störung in der darin eingebetteten Sektion in dem MPLS-TP-Netzwerk auftritt, wobei die Kommunikationsvorrichtung Folgendes umfasst:
eine Tabelle mit Sektionsinformationen über eine verbundene Sektion;
Frame-Sende- und -Empfangsmittel, konfiguriert zum Empfangen des AIS-Frame und zum Übertragen des AIS-Frame; und
Empfangsframe-Verarbeitungsmittel, konfiguriert zum Sperren, wenn der AIS-Frame empfangen wird, eines Alarms in Bezug auf die Störung der in den AIS-Frame eingefügten Pfade oder zum Steuern der Übertragung des AIS-Frame je nachdem, ob die Kommunikationsvorrichtung eine Terminierungsvorrichtung ist.

9. Verfahren zum Senden eines AIS-Frame in einem MPLS-TP-Netzwerk, wobei das Verfahren Folgendes beinhaltet:
Einfügen in den AIS-Frame, wenn eine Störung einer Sektion erkannt wird, von Informationen über Pfade, über die ein AIS-Frame auszugeben ist, wenn eine Störung in der Sektion auftritt, bestimmt anhand eines an einem Ort der Störung beteiligten Eingangsports oder eines an dem Störungsort beteiligten Sektionsendpunkts der Sektion und Ausgeben des AIS-Frame von dem Ausgangsport, bestimmt von dem Eingangsport oder dem am Störungsort beteiligten Sektionsendpunkt.

10. Nichtflüchtiges, computerlesbares Medium, auf dem ein Programm gespeichert ist, um zu bewirken, dass ein Computer das Verfahren zum Senden eines AIS-Frame nach Anspruch 9 ausführt.

## Revendications

1. Système de communication dans un réseau MPLS-TP, le système de communication comprenant :
un appareil de transmission (231, 232) configuré pour, lorsqu'une défaillance est détectée, transmettre une trame AIS ; et
un appareil de réception configuré pour recevoir la trame AIS, dans lequel l'appareil de transmission comprend :
un moyen de traitement de trame de transmission détenant des premières informations de section à propos d'une section et de chemins sur chacun desquels la trame AIS doit être sortie lorsqu'une défaillance survient dans la section et configuré pour, lorsqu'une défaillance survient, insérer des informations sur les chemins dans la trame AIS sur la base d'un emplacement de la défaillance et des premières informations de section, et pour déterminer un port duquel la trame de notification doit être sortie ; et
un moyen de transmission de trame configuré pour recevoir la trame AIS et des informations à propos du port du moyen de traitement de trame de transmission et pour transmettre la trame AIS du port,
l'appareil de réception comprenant :
un moyen de transmission et de réception de trame configuré pour recevoir la trame AIS et pour transférer la trame AIS ; et
un moyen de traitement de trame reçue configuré pour, lorsque la trame AIS est reçue, inhiber une alarme associée à la défaillance des chemins insérée dans la trame AIS ou commander un transfert de la trame AIS selon que l'appareil de réception est un appareil de terminaison.

2. Système de communication selon la revendication 1, dans lequel
l'appareil de transmission détient une première table comprenant les premières informations de section,
la première table stocke une ou plusieurs entrées comme les premières informations de section, chacune des entrées ayant, en tant que champs, un port d'entrée connecté à une section, un noeud d'extrémité de section de la section, des chemins sur chacun desquels la trame AIS doit être sortie, et un port de sortie connecté à la section, et
lorsqu'une défaillance est détectée, le moyen de traitement de trame de transmission consulte la première table en utilisant, en tant que clé, l'un d'entre un port d'entrée impliqué à un emplacement de la défaillance et un noeud d'extrémité de section impliqué à l'emplacement de la défaillance, insère des informations à propos de chemins retrouvés dans la trame AIS, et détermine que le port de sortie retrouvé est un port duquel la trame AIS doit être sortie.

3. Système de communication selon la revendication 2, dans lequel
l'appareil de réception détient une deuxième table comprenant les deuxièmes informations de section et ayant les mêmes champs que la première table,
lorsque la trame AIS est reçue, le moyen de traitement de trame reçue consulte la deuxième table en utilisant, en tant que clé, un port duquel la trame AIS a été entrée et, lorsque les informations de port de sortie retrouvé sont une valeur indiquant une terminaison d'un chemin, masque un état de défaillance sur la base de la trame AIS, et
lorsque les informations de port de sortie ne sont pas une valeur indiquant une terminaison d'un chemin, le moyen de traitement de trame reçue détermine si un chemin retrouvé et un chemin inséré dans la trame AIS correspondent, lorsque les chemins correspondent, fait une détermination selon laquelle le port de sortie retrouvé est une destination de transfert de la trame AIS, et notifie le moyen de transmission et de réception de trame de la détermination.

4. Système de communication selon l'une quelconque des revendications 1 ou 3, dans lequel le moyen de traitement de trame de transmission insère au moins l'un d'entre l'emplacement de la défaillance et un type de la défaillance dans la trame AIS.

5. Système de communication selon la revendication 3 ou 4, dans lequel lorsque le moyen de traitement de trame reçue retrouve une pluralité d'entrées comprenant des informations à propos de différents ports de sortie en consultant la table, le moyen de traitement de trame reçue reproduit la trame AIS de telle sorte que le nombre de trames de notification devient égal au nombre des entrées.

6. Système de communication selon l'une quelconque des revendications 3 à 5, dans lequel le moyen de traitement de trame reçue actualise des informations de chemin insérées dans la trame AIS conformément à un résultat de la consultation de la deuxième table.

7. Appareil de transmission (231, 232) dans un réseau MPLS-TP, l'appareil de transmission comprenant :
un moyen de traitement de trame de transmission détenant des premières informations de section à propos d'une section et de chemins sur chacun desquels la trame AIS doit être sortie lorsqu'une défaillance survient dans la section et est configuré pour, lorsqu'une défaillance survient, insérer des informations à propos de chemins pour notification de défaillance dans la trame AIS sur la base d'un emplacement de la défaillance et des premières informations de section, et déterminer un port duquel la trame AIS doit être sortie ; et
un moyen de transmission de trame configuré pour recevoir la trame AIS et des informations à propos du port du moyen de traitement de trame de transmission et transmettre la trame AIS du port.

8. Appareil de communication (4, 5), faisant une notification indiquant la détection d'une défaillance dans une section et recevant une trame AIS ayant des informations à propos de chemins sur chacun desquels la trame AIS doit être sortie lorsqu'une défaillance survient dans la section intégrée dedans dans un réseau MPLS-TP, l'appareil de communication comprenant :
une table comprenant des informations de section à propos d'une section connectée ;
un moyen de transmission et de réception de trame configuré pour recevoir la trame AIS et transférer la trame AIS ; et
un moyen de traitement de trame reçue configuré pour, lorsque la trame AIS est reçue, inhiber une alarme associée à la défaillance des chemins insérée dans la trame AIS ou commander le transfert de la trame AIS selon que l'appareil de communication est un appareil de terminaison.

9. Procédé de transmission d'une trame AIS dans un réseau MPLS-TP, le procédé comprenant :
lorsqu'une défaillance d'une section est détectée, insérer, dans la trame AIS, des informations à propos de chemins sur chacun desquels la trame AIS doit être sortie lorsqu'une défaillance survient dans la section déterminée d'après l'un d'entre un port d'entrée impliqué à un emplacement de la défaillance et un noeud d'extrémité de section de la section impliqué à l'emplacement de la défaillance et sortir la trame AIS du port de sortie déterminé d'après le port d'entrée ou le noeud d'extrémité de section impliqué à l'emplacement de la défaillance.

10. Support non transitoire lisible par ordinateur stockant un programme pour faire qu'un ordinateur effectue le procédé de transmission d'une trame AIS selon la revendication 9.
